# EUROPEAN PATENT SPECIFICATION

(11) **EP 1 201 973 B1**
(45) Date of publication and mention of the grant of the patent: **02.07.2003**
(21) Application number: 01203959.0
(22) Date of filing: 16.10.2001
(51) Int. Cl.: F16J 13/22, B01J 3/03, B65D 90/58

(54) **Vessel with a lid**
Druckbehälter mit einem Deckel
Cuve avec un couvercle

(30) Priority: 27.10.2000 BE 200000689
(43) Date of publication of application: 02.05.2002
(73) Proprietor: Loos, Johannes Henricus, 2590 Berlaar (BE)
(72) Inventor: Loos, Johannes Henricus, 2590 Berlaar (BE)
(74) Representative: Donné, Eddy

(56) References cited:
- EP-A- 0 456 911
- DE-A- 3 641 328
- GB-A- 1 071 010
- US-A- 4 157 146
- US-A- 6 095 365

## Description

The present invention concerns a vessel with a lid, which vessel is provided with an opening extending in a flat surface and which can be sealed by the lid, whereby this lid can rotate in relation to the vessel, around an axis directed perpendicular to the surface of the opening and situated next to the opening, between a position in which it is rotated shut and in which it is situated opposite to the opening and an open position in which it is situated next to the opening.

The invention in particular concerns a pressure vessel with a lid, whereby the vessel can be put under pressure. When this is the case, the lid still has to provide for a good sealing.

Such pressure vessels with a lid are for example part of a mixer plant, whereby a mixing element is then mounted inside the vessel, forming a mixing vessel.

Such mixer plants are used to produce a mixture on the basis of cement and sand, and possibly other substances, whereby compressed air is usually supplied to the mixing vessel to carry the mixture to its ultimate destination via flexible pipes.

It is very important thereby, that the lid can hermetically seal the opening through which the components are provided in the mixing vessel.

Mixer plants are known which are provided with loose sealing lids, which can be attached to the mixing vessel for example by means of a bayonet coupling or by means of clamps. As these lids are loose, they can get lost or can be easily damaged.

These disadvantages are not found in a mixer plant with a vessel having a lid according to the first paragraph, whereby the lid is fixed to the vessel such that it can rotate.

With some known mixer plants of this type, however, the lid is situated inside the mixing vessel.

However, this restricts the size of the filling opening since, besides this filling opening, inside the mixing vessel or for example the upstand or standing filling pipe thereof in which the filling opening is usually situated, there must be room for the lid in its open position.

The lid is pressed against the edge of the filling opening by the pressure which, after the mixing vessel has been filled, is built up in the latter thanks to the supply of compressed air. However, the vessel is not immediately hermetically sealed, so that while the pressure is being built up, cement, sand and such can temporarily escape between the lid and the mixing vessel or the filling pipe thereof, until the lid is pressed with sufficient pressure against the mixing vessel.

According to the regulations, the mixing element must be kept at a certain distance from the filling opening for safety reasons. This implies that, because of the space occupied by a lid which is situated on the inside in relation to the filling opening, this filling opening must be situated higher than usual, so that it is more difficult to shovel in the components to be mixed.

Vessels according to the first paragraph with a rotating lid at the outside of the vessel are also known. The problem with these vessels is to lock the lid in closed position in a safe way when pressure inside the vessel is above atmospheric pressure. Vessels are known wherein cams are used for this purpose.

Such vessel is described in US-A-6.095.365. Cam members rotate about cam shafts on adjusting bolts screwed in nuts which in turn rotate about pins in cam support brackets fixed to the vessel. Cam shafts and pins extend horizontally, parallel to tangents of the round opening to be closed. In order to close and lock the lid when it is rotated shut, the nuts are successively rotated about the pins to raise the nuts and bolts to a vertical position, with the bolts each disposed in a slot of a bearing plate fixed to the lid, after which the cam members are rotated about the cam shafts. For unlocking and opening the lid, these movements are made in the inverse order.

The cam assemblies are of a rather complicated structure and locking is time consuming. The locking of unlocking requires for each cam assembly two different rotations, one of the nut and bolt and one of the cam. This makes automation of the locking difficult and costly.

Also, the invention aims a vessel with a rotating lid at the outside of the vessel, which does not have the above-mentioned disadvantages and which is of a relatively simple construction and which can be hermetically sealed in a fast and easy manner, whereby automation of the locking of the lid is relatively easy.

According to the invention, this aim is reached in a vessel with lid, which vessel is provided with an opening extending in a flat surface and which can be sealed by the lid, whereby this lid can rotate in relation to the vessel, around an axis directed perpendicular to the surface of the opening and situated next to the opening, between a position in which it is rotated shut and in which it is situated opposite to the opening and an open position in which it is situated next to the opening, whereby the lid is situated on the outside of the opening in relation to the vessel, and means are provided on the vessel to bring the lid from the position in which it is rotated shut in the closed position and to lock it, said means comprising at least two cams which can rotate in relation to the vessel, characterised in that each of the cams is rotating in a support which is stationary mounted on the vessel, the stationary supports being situated and shaped such that the lid can be rotated shut between the cams and the vessel.

The cams are not mounted on pivoting nuts but directly on stationary supports. Only a single rotation of the cams is required to lock or unlock the lid.

The locking means'contain preferably two cams, whereby one cam is situated near the axis of rotation of the lid, and the other one is situated diametrically opposed to it.

The locking means preferably contain hydraulic or pneumatic means for rotating the cams.

As only one movement, this is a rotation of each cam has to be performed, this movement can be easily be performed by hydraulic or pneumatic means.

In a particular embodiment, the cams are rotating around a geometrical axis extending transversely with respect to the nearest edge of the opening, this is in radial direction with respect to the opening when this opening is round.

Each cam may be fixed on a shaft which is rotating in a support.

A special application of the invention regards mixer plants, whereby the vessel is a mixing vessel and the opening is a filling opening.

In order to better explain the characteristics of the invention, the following preferred embodiment of a vessel with a lid according to the invention is described as an example only without being limiting in any way, with reference to the accompanying drawings, in which:
Figure 1 represents a front view of a mixer plant provided with a vessel with a lid according to the invention, whereby the lid is rotated open;
Figure 2 represents a top view of the mixer plant of figure 1;
Figure 3 represents a side view according to arrow F3 in figure 1, but with the lid rotated shut;
Figure 4 represents a part of a top view analogous to that in figure 3, but with the lid closed and locked;
Figure 5 represents a section according to line V-V in figure 4;
Figure 6 represents a section according to line VI-VI in figure 4, to a larger scale;
Figure 7 represents a view according to arrow F7 in figure 4, drawn to a larger scale;
Figure 8 represents a view of a handle for locking the lid, but with reference to another embodiment of the invention.

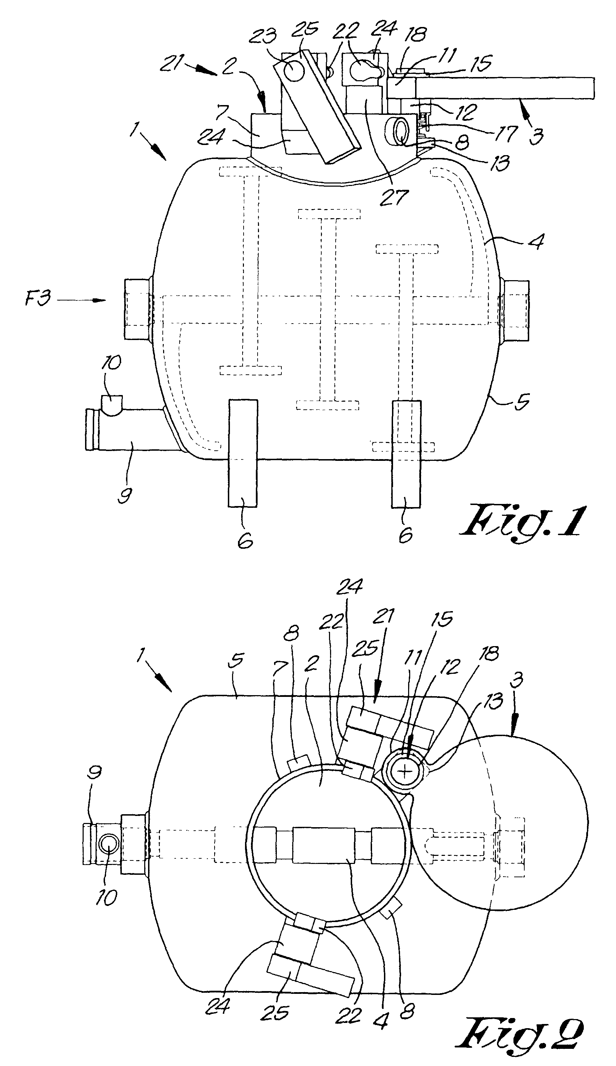

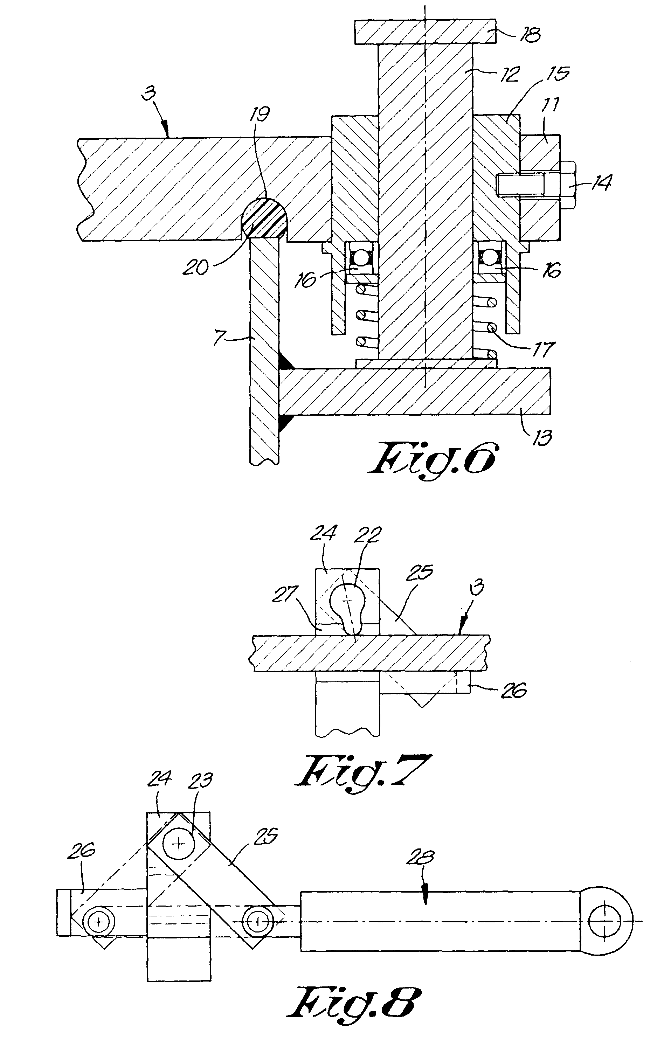

The mixer plant represented in figures 1 to 7 mainly comprises a mixing vessel 1 provided with a round filling opening 2 at the top, a lid 3 to seal this filling opening 2 and a mixing element 4 erected in the mixing vessel 1, consisting for example of a shaft and blades or mixing arms provided onto it, driven by a motor which is not represented in the figures.

The mixing vessel 1 consists of a round tub 5 with spherical far ends, resting horizontally with its longitudinal axis in supports 6 standing for example on a frame, and of a round filling pipe 7 which is connected onto the top side of the tub 5. The top far end of this filling pipe 7 is flat and open, and it forms the above-mentioned filling opening 2 which thus extends in a flat plane.

Onto the filling pipe 7 are connected one or several, in the given example two, mouthpieces 8. One of them is used to insert water, followed by compressed air, in the filling pipe 7 and thus in the mixing vessel 1, the other for the venting after the mixing. At the bottom, the tub 5 is provided with an outlet 9 for the mixture. Into this outlet 9, onto which can be connected a drain hose, can also flow a mouthpiece 10 to possibly supply extra compressed air, especially for the conveyance through the hose.

The lid 3 is hinge-mounted around a shaft 12 with a part 11 protruding outside its perimeter which, as is represented in detail in figure 6, is fixed to a support 13 which is welded onto the outside of the filling pipe 7. Said shaft 12 is perpendicular to the surface of the filling opening 2.

The lid 3 can shift in the vertical height over the shaft 12.

As is represented in detail in figure 6, the lid 3 is fixed to this end on a bush 15 which envelops the shaft 12 in a revolving manner by means of a bolt 14.

With the help of a ball bearing 16, this bush 15 is pushed up by a spring 17 which surrounds the shaft 12 between the support 13 and the bush 15. A collar 18 at the top far end of the shaft 12 restricts the upward movement of the bush 15.

At a short distance from its outer perimeter, the round lid 3 is provided with a concentric groove 19 whose average diameter coincides with the inner diameter of the open end of the filling pipe 7.

In this groove 19 is clamped a rubber sealing ring 20.

On the mixing vessel 1, in particular on the filling pipe 7, are provided means 21 to lock the lid 3.

These means 21 contain two cams 22 which are rotating about an axis extending transversally to the nearest edge of the opening 2, this is practically radial with respect to the filling opening 2 when this opening is round as in the given example.

The cams 22 are fixed to shafts 23, which are bearing-mounted in supports 24, for example blocks as shown in the figures. The supports 24 are fixed to the vessel 1, for example welded onto the outside of the filling pipe 7 and which are thus stationary with respect to the vessel 1. Instead of being fixed directly on its shaft 23, each of the cams 22 can also be provided on a cam disc, which is then fixed on a shaft 23.

Either of the two supports 24 is erected immediately next to the support 13, while the other is diametrically opposed to the first one.

On the outside of the supports 24, longitudinal handles 25 are fixed on the shafts 23. The rotation of these handles 25 is restricted by a stop 26.

The supports 24 are provided with the necessary recesses 27 on their side which is turned towards the filling opening 2, so as not to hinder the lid 3 while it is rotated shut and locked. Shape and position of the supports 24 is thus such that the lid 3 can be rotated shut and thereby be inserted between the cams 22 and the filling pipe 7 of the vessel 1.

The lid 3 is closed and locked as follows.

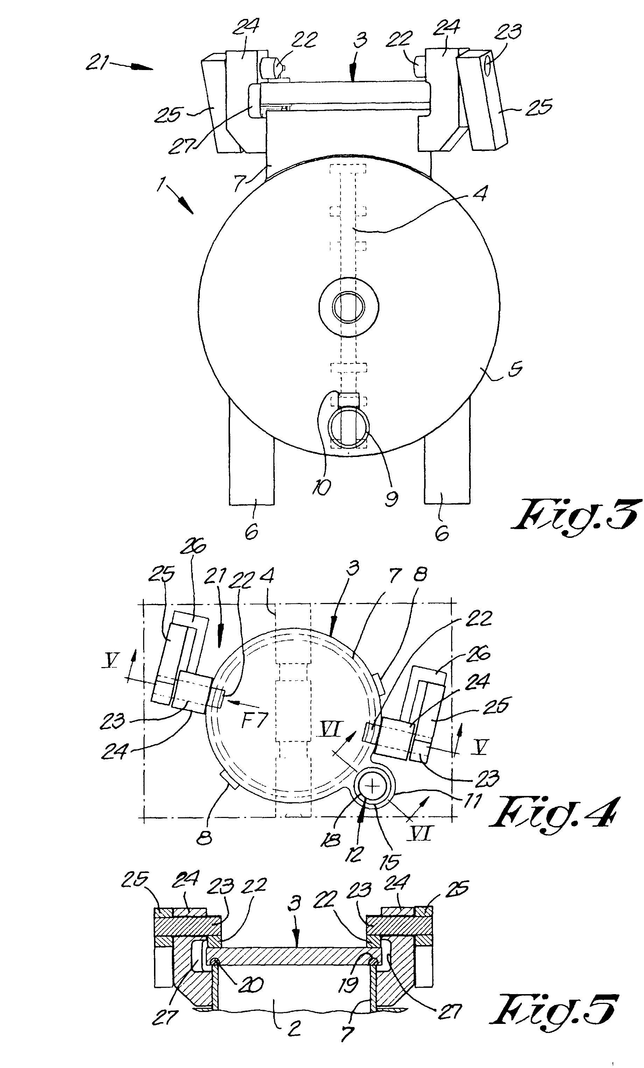

Figures 1 and 2 represent the lid 3 when rotated into the open position. The cams 22 are hereby directed almost horizontally and the handles 25 are practically situated at an angle of 45° in relation to the vertical axis.

After the components for the mixture to be produced have been introduced via the filling opening 2, the lid 3 is rotated to above the filling opening 2, i.e. in the shut position represented in figure 3.

Because of the spring 17, the lid 3 is situated in its highest position on the shaft 12, so that the sealing ring 20 is not or barely situated against the farthest edge of the filling pipe 7.

By placing the shaft 12 so that a theoretical plane through the middle of said shaft 12 and the middle of the filling opening 2 forms an angle of about 45° in relation to the longitudinal direction of the mixing vessel 1, it can be obtained that, for the given model of the mixing vessel 1, the lid 3 does not protrude sideways outside the mixing vessel 1 during the above-mentioned rotation. It is clear that, for example with other models of the mixing vessel 1, other positions of the shaft 12 are possible.

In order to bring the lid 3 in the closed position and to lock it, the two shafts 23 are rotated over somewhat more than 45° by means of the handles 25.

The cams 22 thereby rotate towards the bottom, first until they are directed vertically down, whereby they thus push the lid 3 down against the action of the spring 17, so that the sealing ring 20 is strongly pushed against the edge of the filling pipe 7.

The handles 25 are rotated up against their stops 26, which are situated such that the cams 22 rotate somewhat further during this rotation than the downward directed position, into the position which is clearly shown in figure 7. The pressure on the sealing ring 20 diminishes somewhat during the rotation past the downward directed position, but it is still sufficient to ensure a hermetic sealing. Thus is avoided that these cams 22 would be rotated back due to the upward pressure exerted on the cams 22 by the lid 3 as a result of the pressure in the mixing vessel 1.

Figures 4 to 7 represent the lid 3 in the closed position when locked.

After the mixing and the emptying of the mixing vessel 1, first the handles 25, and consequently also the shafts 23 with the cams 22, are rotated back into their initial position, so that, under the influence of the spring 17, the lid 3 is pushed up a little, from the closed position into the position in which it is rotated shut, after which it can be easily rotated sideways into the open position.

The cams 22 do not necessarily have to be rotated manually, as described above. They can also be rotated in a mechanical manner, for example by means of a motor, or pneumatically or hydraulically.

Figure 8 represents a variant whereby each of the handles 25 is fixed to a hydraulic or pneumatic cylinder 28 which may bring about the rotation of the handles 25 up against the stop 26 and vice versa.

It is clear that the stop 26 for the restriction of the rotation of a cam 22 must not necessarily work in conjunction with the handle 25. This stop 26 could also work directly in conjunction with the cam 22.

Although the sealing ring 20 is preferably provided in the lid 3, the latter can also be provided in the edge of the filling pipe 7, according to a variant, provided that it is sufficiently thick.

Although a mixer plant with a mixing vessel 1 and a lid 3 are described above, the vessel must not necessarily be a mixing vessel, nor must the opening be a filling opening. The invention can also be applied to other vessels, in particular pressure vessels, which are provided with an opening sealed by a lid.

The invention is by no means limited to the above-described embodiment represented in the accompanying drawings; on the contrary, such a vessel with a lid can be made in all sorts.of variants while still remaining within the scope of the invention as defined by the appended claims.

## Claims

1. Vessel with a lid, which vessel (1) is provided with an opening (2) extending in a flat surface and which can be sealed by the lid (3), whereby this lid (3) can rotate in relation to the vessel (1), around an axis directed perpendicular to the surface of the opening (2) and situated next to the opening (2), between a position in which it is rotated shut and in which it is situated opposite to the opening (2) and an open position in which it is situated next to the opening (2), whereby the lid (3) is situated on the outside of the opening (2) in relation to the vessel (1), and means (21) are provided on the vessel (1) to bring the lid (3) from the position in which it is rotated shut in the closed position and to lock it, said means (21) comprising at least two cams (22) which can rotate in relation to the vessel (1), **characterised in that** each of the cams (22) is rotatable in a support (24) which is stationary mounted on the vessel (1), the stationary supports (24) being situated and shaped such that the lid (3) can be rotated shut between the cams (22) and the vessel (1).

2. Vessel with a lid according to claim 1, **characterised in that** the locking means (21) contain two cams (22), whereby one cam is situated near the axis of rotation of the lid (3), and the other one is situated diametrically opposed to it.

3. Vessel with a lid according to claim 1 or 2, **characterised in that** the locking means (21) contain hydraulic or pneumatic means for rotating the cams (22).

4. Vessel with a lid according to any one of claims 1 to 3, **characterised in that** the cams (22) are rotating around a geometrical axis extending transversely with respect to the nearest edge of the opening (2), this is in the radial direction with respect to the opening (2) when this opening is round.

5. Vessel with a lid according to any one of the preceding claims, **characterised in that** each cam (22) is fixed on a shaft (23) which is rotating in a support (24).

6. Vessel with a lid according to claim 5, **characterised in that**, on the outside of the support (24), a handle (25) is fixed on the shaft (23).

7. Vessel with a lid according to any of the preceding claims, **characterised in that** a cam (22) can be rotated to somewhat past the position in which the lid (3) is pushed maximally against the edge of the opening (2), which position is the locked position.

8. Vessel with a lid according to claim 7, **characterised in that** the locking means (21) contain stops (26) which are fixed in relation to the vessel (1), and which restrict the rotation of the cam (22) in the closing and locking direction of the lid (3) directly or indirectly to the locked position.

9. Vessel with a lid according to any of the preceding claims, **characterised in that** the vessel (1) contains a tub (5), and **in that** a plane through the axis of rotation of the lid (3) and the middle of the opening (2) forms an angle of about 45° in relation to the axis of the tub (5).

10. Vessel with a lid according to any of the preceding claims, **characterised in that** the lid (3) is provided with a groove (19) at its bottom side in which is provided a sealing ring (20).

11. Vessel with a lid according to any of the preceding claims, **characterised in that** the lid (3) can rotate around a shaft (12) standing on a support (13) which is fixed in relation to the vessel (1), whereby the lid (3) can be shifted in the height over this shaft (12).

12. Vessel with a lid according to claim 11, **characterised in that** a spring (17) surrounds the shaft (12) and pushes the lid (3) away from the vessel (1).

13. Vessel with a lid according claim 12, **characterised in that** the lid (3) is fixed on a bush (15) which rests on the spring (17) by means of a bearing (16), which spring surrounds the shaft (12) between said bush (15) and the support (13).

14. Vessel with a lid according to any of the preceding claims, **characterised in that** the vessel (1) contains a pipe (7) and **in that** the opening (2) is formed by the open end of the pipe (7).

15. Vessel with a lid according to any of the preceding claims, **characterised in that** it is a pressure vessel whose internal pressure can be set higher than the ambient pressure.

16. Vessel with a lid according to any of the preceding claims, **characterised in that** it is a mixing vessel (1) of a mixer plant, and **in that** the opening is the filling opening (2) of this mixing vessel (1).

## Patentansprüche

1. Behälter mit einem Deckel, wobei der Behälter (1) mit einer Öffnung (2) versehen ist, die sich in eine flache Oberfläche erweitert und die mit dem Deckel (3) abgedichtet werden kann, wobei dieser Deckel (3) in Bezug auf den Behälter (1) um eine Achse, die lotrecht zur Oberfläche der Öffnung (2) gerichtet ist und sich neben der Öffnung (2) befindet, drehbar ist zwischen einer Position, in der er zugedreht wird und in der er sich gegenüber der Öffnung (2) befindet und einer offenen Position, in der er sich neben der Öffnung (2) befindet, wobei sich der Deckel (3) in Bezug auf den Behälter (1) an der Außenseite der Öffnung (2) befindet und Mittel (21) am Behälter (1) vorgesehen sind, um den Deckel (3) von der Position, in der er in die geschlossene Position zugedreht wird zu bringen und zu verriegeln, und die erwähnten Mittel (21) mindestens zwei Nocken (22) umfassen, die in Bezug auf den Behälter (3) drehbar sind, **gekennzeichnet dadurch, dass** jede der Nocken (22) in einer ortsfest am Behälter (3) angebrachten Unterlage (24) dreht und die ortsfesten Unterlagen (24) so angeordnet und geformt sind, dass der Deckel (3) sich zwischen den Nocken (22) und dem Behälter (3) zudrehen lässt.

2. Behälter mit einem Deckel gemäß Anspruch 1, **gekennzeichnet dadurch, dass** die Verreigelungsmittel (21) zwei Nocken (22) umfassen, wobei eine Nocke sich in der Nähe der Drehachse des Deckels (3) und die andere sich dieser genau gegenüber befindet.

3. Behälter mit einem Deckel gemäß Anspruch 1 oder 2, **gekennzeichnet dadurch, dass** die Verriegelungsmittel (21) hydraulische oder pneumatische Mittel zum Drehen der Nocken (22) umfassen.

4. Behälter mit einem Deckel gemäß irgendeinem der Ansprüche 1 bis 3, **gekennzeichnet dadurch, dass** die Nocken (22) sich um eine geometrische Achse drehen, die sich quer in Bezug auf den nächstliegenden Rand der Öffnung (2) erstrecken, was in radialer Richtung in Bezug auf die Öffnung (2) ist, wenn diese Öffnung rund ist.

5. Behälter gemäß irgendeinem der vorgenannten Ansprüche, **gekennzeichnet dadurch, dass** jede der Nocken (22) an einer Welle (23) befestigt ist, die sich in einer Unterlage (24) dreht.

6. Behälter mit einem Deckel gemäß Anspruch 5, **gekennzeichnet dadurch, dass** außen an der Unterlage (24) ein Griff (25) an der Welle (23) befestigt ist.

7. Behälter mit einem Deckel gemäß irgendeinem der vorgenannten Ansprüche, **gekennzeichnet dadurch, dass** eine Welle (22) ein wenig über die Position hinaus gedreht werden kann, in welcher der Deckel (3) maximal gegen den Rand der Öffnung (2) gedrückt wird, was die verriegelte Position ist.

8. Behälter mit einem Deckel gemäß Anspruch 7, **gekennzeichnet dadurch, dass** die Verriegelungsmittel (21) Anschläge (26) aufweisen, die in Bezug auf den Behälter (1) befestigt sind und die die Drehung der Nocke (22) in der Schließ- und Verriegelungsrichtung des Deckels (3) direkt oder indirekt auf die verriegelte Position begrenzen.

9. Behälter mit einem Deckel gemäß irgendeinem der vorgenannten Ansprüche, **gekennzeichnet dadurch, dass** der Behälter (1) eine Wanne (5) umfasst und dass eine Ebene durch die Drehachse des Deckels (3) und die Mitte der Öffnung (2) einen Winkel von ca. 45 ° in Bezug auf die Achse der Wanne (5) bildet.

10. Behälter mit einem Deckel gemäß irgendeinem der vorgenannten Ansprüche, **gekennzeichnet dadurch, dass** der Deckel (3) an seiner unteren Seite mit einer Rille (19) versehen ist, in die ein Dichtungsring (20) eingelegt ist.

11. Behälter mit einem Deckel gemäß irgendeinem der vorgenannten Ansprüche, **gekennzeichnet dadurch, dass** sich der Deckel (3) um eine Welle (12) drehen kann, die auf einer Unterlage (13) steht, die in Bezug auf den Behälter (1) befestigt ist, wobei der Deckel (3) in der Höhe über diese Welle (12) verschoben werden kann.

12. Behälter mit einem Deckel gemäß Anspruch 11, **gekennzeichnet dadurch, dass** eine Feder (17) die Welle (12) umgibt und den Deckel (3) weg vom Behälter (3) drückt.

13. Behälter mit einem Deckel gemäß Anspruch 12, **gekennzeichnet dadurch, dass** der Deckel (3) auf einer Hülse (15) befestigt ist, die mittels eines Lagers (16) auf der Feder (17) ruht, wobei die Feder (17) die Welle (12) zwischen der erwähnten Hülse (15) und der Unterlage (13) umschließt.

14. Behälter mit einem Deckel gemäß irgendeinem der vorgenannten Ansprüche, **gekennzeichnet dadurch, dass** der Behälter (1) ein Rohr (7) umfasst und dass die Öffnung (2) durch das offene Ende des Rohrs (7) gebildet wird.

15. Behälter mit einem Deckel gemäß irgendeinem der vorgenannten Ansprüche, **gekennzeichnet dadurch, dass** es sich um einen Druckbehälter handelt, dessen interner Druck höher als der Umgebungsdruck eingestellt werden kann.

16. Behälter mit einem Deckel gemäß irgendeinem der vorgenannten Ansprüche, **gekennzeichnet dadurch, dass** es sich um einen Mischbehälter (1) einer Mischanlage handelt und dass die Öffnung die Einfüllöffnung (2) dieses Mischbehälters (1) ist.

## Revendications

1. Récipient comportant un couvercle, ledit récipient (1) étant muni d'une ouverture (2) s'étendant dans une surface plate et pouvant être fermé de manière hermétique par le couvercle (3), par lequel ce couvercle (3) est à même de tourner par rapport au récipient (1) autour d'un axe orienté perpendiculairement à la surface de l'ouverture (2) et situé à proximité de l'ouverture (2), entre une position dans laquelle il est serré par rotation et dans laquelle il est disposé face à l'ouverture (2) et une position ouverte dans laquelle il est situé à proximité de l'ouverture (2), par lequel le couvercle (3) est situé du côté externe de l'ouverture (2) par rapport au récipient (1), des moyens (21) étant prévus sur le récipient (1) pour amener le couvercle (3) depuis la position dans laquelle il est serré par rotation jusque dans la position fermée et pour le verrouiller, lesdits moyens (21) comprenant au moins deux cames (22) qui sont en mesure de tourner par rapport au récipient (1), **caractérisé en ce que** chacune des cames (22) est à même de tourner sur un support (24) qui est monté à l'état stationnaire sur le récipient (1), les supports stationnaires (24) étant disposés et configurés de telle sorte que le couvercle (3) peut être fermé par rotation entre les cames (22) et le récipient (1).

2. Récipient comportant un couvercle selon la revendication 1, **caractérisé en ce que** les moyens de verrouillage (21) contiennent deux cames (22), par lequel une came est située à proximité de l'axe de rotation du couvercle (3), l'autre étant situé en position diamétralement opposée à la première citée.

3. Récipient comportant un couvercle selon la revendication 1 ou 2, **caractérisé en ce que** les moyens de verrouillage (21) contiennent des moyens hydrauliques ou pneumatiques pour faire tourner les cames (22).

4. Récipient comportant un couvercle selon l'une quelconque des revendications 1 à 3, **caractérisé en ce que** les cames (22) tournent autour d'un axe géométrique s'étendant transversalement par rapport au bord le plus proche de l'ouverture (2) lorsque cette ouverture est ronde.

5. Récipient comportant un couvercle selon l'une quelconque des revendications précédentes, **caractérisé en ce que** chaque came (22) est fixée sur un arbre (23) qui tourne dans un support (24).

6. Récipient comportant un couvercle selon la revendication 5, **caractérisé en ce que**, sur le côté externe du support (24), une poignée (25) est fixée sur l'arbre (23).

7. Récipient comportant un couvercle selon l'une quelconque des revendications précédentes, **caractérisé en ce qu'**on peut faire tourner une came (22) légèrement au-delà de la position dans laquelle le couvercle (3) est poussé au maximum contre le bord de l'ouverture (2), ladite position étant la position de verrouillage.

8. Récipient comportant un couvercle selon la revendication 7, **caractérisé en ce que** les moyens de verrouillage (21) contiennent des arrêts (26) qui sont fixes par rapport au récipient (1) et qui restreignent la rotation de la came (22) dans la direction de fermeture et de verrouillage du couvercle (3) de manière directe ou indirecte à la position de verrouillage.

9. Récipient comportant un couvercle selon l'une quelconque des revendications précédentes, **caractérisé en ce que** le récipient (1) contient un bac (5) et **en ce que** le plan passant par l'axe de rotation du couvercle (3) et le milieu de l'ouverture (2) forme un angle d'environ 45 degrés par rapport à l'axe du bac (5).

10. Récipient comportant un couvercle selon l'une quelconque des revendications précédentes, **caractérisé en ce que** le couvercle (3) est muni d'une rainure (19) sur son côté inférieur, dans laquelle on prévoit un anneau d'étanchéisation (20).

11. Récipient comportant un couvercle selon l'une quelconque des revendications précédentes, **caractérisé en ce que** le couvercle (3) est à même de tourner autour d'un arbre (12) dressé sur un support (13) qui est fixe par rapport au récipient (1), par lequel le couvercle (3) peut être déplacé en hauteur par-dessus cet arbre (12).

12. Récipient comportant un couvercle selon la revendication 11, **caractérisé en ce qu'**un ressort (17) entoure l'arbre (12) et pousse le couvercle (3) à l'écart du récipient (1).

13. Récipient comportant un couvercle selon la revendication 12, **caractérisé en ce que** le couvercle (3) est fixé sur une douille (15) qui s'appuie sur le ressort (17) à l'aide d'un palier (16), ledit ressort entourant l'arbre (12) entre ladite douille (15) et le support (13).

14. Récipient comportant un couvercle selon l'une quelconque des revendications précédentes, **caractérisé en ce que** le récipient (1) contient un tuyau (7) et **en ce que** l'ouverture (2) est formée par l'extrémité ouverte du tuyau (7).

15. Récipient comportant un couvercle selon l'une quelconque des revendications précédentes, **caractérisé en ce qu'**il s'agit d'un récipient sous pression dont la pression interne peut être réglée pour être supérieure à la pression ambiante.

16. Récipient comportant un couvercle selon l'une quelconque des revendications précédentes, **caractérisé en ce qu'**il s'agit d'un récipient de mélange (1) d'une installation de mélange, et **en ce que** l'ouverture représente l'ouverture de remplissage (2) de ce récipient de mélange (1).
